(19)

Europäisches
Patentamt
European
Patent Office
Office européen
des brevets

(11) **EP 3 809 338 A1**

(12) **EUROPEAN PATENT APPLICATION**

(43) Date of publication:
21.04.2021 Bulletin 2021/16

(51) Int Cl.:
***G06N 3/12*** (2006.01)  ***G06N 3/08*** (2006.01)

(21) Application number: **20192793.6**

(22) Date of filing: **26.08.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.09.2019  JP 2019168725**

(71) Applicant: **FUJITSU LIMITED
Kanagawa 211-8588 (JP)**

(72) Inventor: **TSUNODA, Yukito
Kawasaki-shi, Kanagawa 211-8588 (JP)**

(74) Representative: **Haseltine Lake Kempner LLP
Cheapside House
138 Cheapside
London
EC2V 6BJ (GB)**

(54) **INFORMATION PROCESSING APPARATUS, PROGRAM AND INFORMATION PROCESSING METHOD**

(57)    An information processing apparatus that executes evolutionary computation for calculating an eigen solution of an equation by using a plurality of input parameters, the apparatus includes a first calculating unit, in order to calculate an eigen solution of an equation of a first generation, calculating function values of a function in the equation as first plural function values for partial input parameters of the plurality of input parameters; a predicting unit predicting eigen solution candidates for the first plural function values based on combinations of second plural function values for the partial input parameters and eigen solutions calculated by using the plurality of input parameters in a plurality of generations before the first generation; and a second calculating unit calculating a solution of the equation in vicinity of the input parameters corresponding to the eigen solution candidates predicted by the predicting unit.

FIG. 1

**Description**

FIELD

The embodiments discussed herein are related to an information processing apparatus and so on.

BACKGROUND

A genetic algorithm (GA) (see Japanese Laid-open Patent Publication Nos. 2005-209211 and 2006-88331, for example) has been known as one of evolutionary computation (EC). According to a genetic algorithm, for example, input values are converted to bit sequences and are generated randomly. Then, input values are selected (by keeping ones having a good characteristic) and crossing and variations are repeated thereon to find an optimum input value.

A method has been known which applies evolutionary computation for designing an optimum structure. In order to acquire an optimum structure, performance evaluation is to be performed. In order to perform the performance evaluation, an intensity distribution corresponding to the designed structure is to be acquired. In order to acquire the intensity distribution, an eigen solution that satisfies an eigen solution condition is to be calculated.

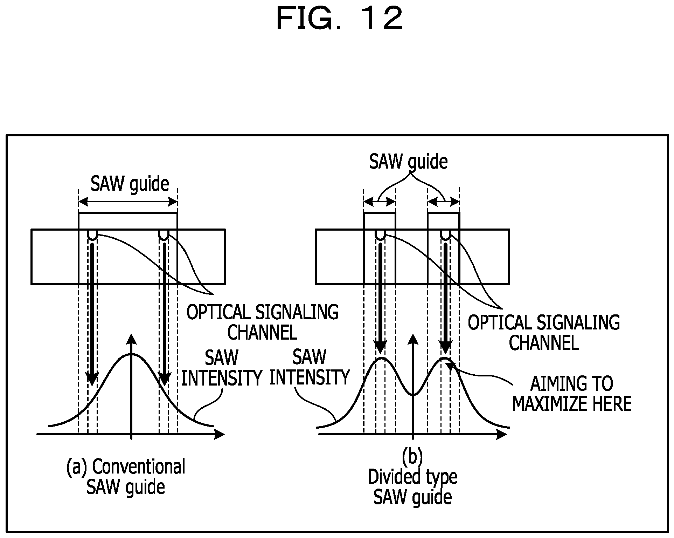

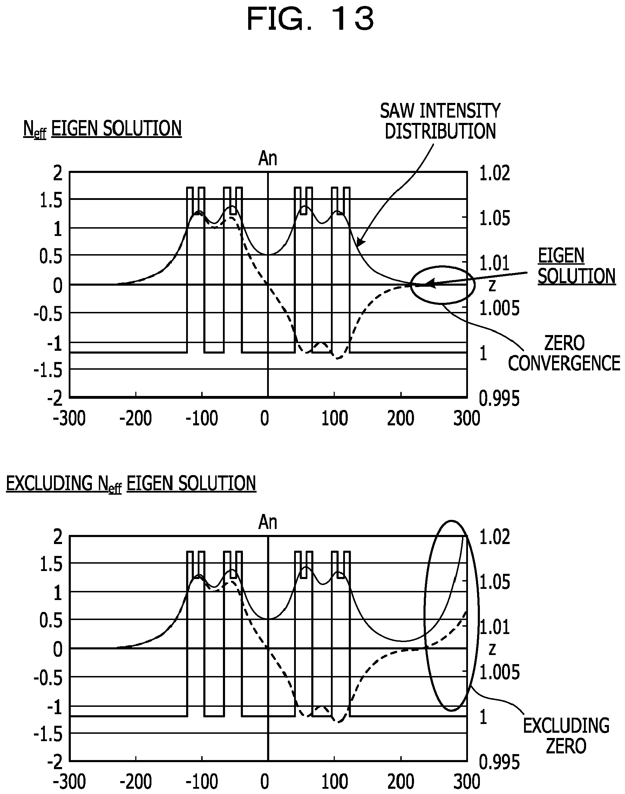

For example, a case where a structure having an arrangement of a surface acoustic wave (SAW) guide (signaling channel) with an optical SAW filter having a highest SAW application efficiency is to be acquired will be described with reference to FIGs. 12 and 13. FIG. 12 is a diagram illustrating a reference example of an SAW intensity distribution with an optical SAW filter having a highest SAW application efficiency. Referring to FIG. 12, two types of SAW intensity distributions where SAW signaling channels are arranged differently are illustrated. The arrangement of SAW signaling channels with a highest SAW intensity on optical signaling channels of SAW guides is acquired to acquire a structure with a highest SAW application efficiency.

The SAW intensity distribution is acquired based on Expression (1).

SAW intensity distribution $S(z)$:

$$S(z) = \begin{cases} A_i \mathrm{Exp}\{K_i(z - zc_i)\} + B_i \mathrm{Exp}\{-K_i(z - zc_i)\} & (N_i < \mathrm{Neff}) \\ A_i \mathrm{Cos}\{K_i(z - zc_i)\} + B_i \mathrm{Sin}\{-K_i(z - zc_i)\} & (N_i > \mathrm{Neff}) \end{cases}$$

$$K_i = k\sqrt{\left|N_i^2 - \mathrm{Neff}^2\right|} \qquad i : \mathrm{Layer\ No.} \tag{1}$$

In order to acquire an SAW intensity distribution, an eigen solution that satisfies an eigen solution condition expressed by Expression (2) is to be calculated. In this example, in order to acquire a proper SAW intensity distribution, an eigen solution that converges to zero ($B_1 = 0$, $A_n = 0$) at both infinite distance is to be calculated.

Eigen Solution Condition

$$\begin{bmatrix} A_{n+1} \\ B_{n+1} \end{bmatrix} = \overline{M_{n+1}(zb_n)} \cdot M_n(zb_n) \cdot \overline{M_n(zb_{n-1})} \cdot M_{n-1}(zb_{n-1})$$

$$\cdots \overline{M_2(zb_1)} \cdot M_1(zb_1) \begin{bmatrix} A_1 \\ B_1 \end{bmatrix}$$

$$M_i(z) = \begin{bmatrix} P_i(z) & Q_i(z) \\ \dfrac{dP_i(z)}{dz} & \dfrac{dQ_i(z)}{dz} \end{bmatrix} \tag{2}$$

and $A_1 = 1$, $B_1 = 0$, $A_n = 0$

FIG. 13 is a diagram illustrating a reference example exhibiting a relationship between an SAW intensity distribution and an eigen solution. FIG. 13 illustrates an SAW intensity distribution of a structure in which four SAW signaling channels are arranged. Referring to the upper diagram of FIG. 13, a value of z that converges to zero ($B_1 = 0$, $A_n = 0$) at both infinite distance is acquired as an eigen solution by changing the value of z for the eigen equation for determining an SAW intensity distribution expressed by Expressions (1) and (2). Referring to the lower diagram of FIG. 13, a value of z that converges to zero ($B_1 = 0$, $A_n = 0$) at both infinite distance is not acquired by changing the value of z for the eigen equation for determining an SAW intensity distribution expressed by Expressions (1) and (2). In other words, an eigen solution is not acquired, for example. Therefore, with the structure in which four SAW signaling channels are arranged, an eigen solution and an SAW intensity distribution are determined as in the upper diagram in FIG. 13.

After the eigen solution and SAW intensity distribution corresponding to the structure are acquired, performance evaluation is performed on the structure based on the SAW intensity distribution for the structure. From the performance evaluations on the structures, a new structure is selected from the structures. Structures of the next generation are generated by crossing and variations, and an optimum design structure is found.

For example, Japanese Laid-open Patent Publication Nos. 2005-209211, 2006-88331, and the like are disclosed.

[SOLUTION TO PROBLEM]

However, in the method in the past applying evolutionary computation for designing an optimum structure, the amount of computational complexity of the evolutionary computation may not be reduced disadvantageously. In other words, for example, the method in the past calculates an eigen solution for acquiring the intensity distribution. In this case, a value of z that converges to zero (B1 = 0, An = 0) at both infinite distance is acquired by changing the value of z for the eigen equations expressed by Expressions (1) and (2). In other words, for example, in the method in the past, in order to acquire an eigen solution, a value of z that converges to zero is repeatedly calculated by changing the value of z in the entire possible range of an eigen solution. This therefore takes a large amount of computational complexity for acquiring an eigen solution, which means that the entire amount of computational complexity of evolutionary computation may not be reduced.

In an aspect, it is desired to reduce the amount of computational complexity of the repetitions for acquiring eigen solutions in evolutionary computation.

[SOLUTION TO PROBLEM]

According to an aspect of the embodiments, an information processing apparatus that executes evolutionary computation for calculating an eigen solution of an equation by using a plurality of input parameters, the apparatus includes a first calculating unit, in order to calculate an eigen solution of an equation of a first generation, calculating function values of a function in the equation as first plural function values for partial input parameters of the plurality of input parameters; a predicting unit predicting eigen solution candidates for the first plural function values based on combinations of second plural function values for the partial input parameters and eigen solutions calculated by using the plurality of input parameters in a plurality of generations before the first generation; and a second calculating unit calculating a solution of the equation in vicinity of the input parameters corresponding to the eigen solution candidates predicted by the predicting unit.

BRIEF DESCRIPTION OF DRAWINGS

Embodiments are set out, by way of example only, with reference to the following drawings, in which:

FIG. 1 is a functional block diagram illustrating a configuration of an information processing apparatus according to Embodiment 1;
FIG. 2 is a diagram illustrating model generation according to Embodiment 1;
FIG. 3 is a diagram illustrating eigen solution prediction according to Embodiment 1;
FIG. 4 is a diagram illustrating an example of a flowchart for the model generation according to Embodiment 1;
FIG. 5 is a diagram illustrating an example of a flowchart for structure design with evolutionary computation according to Embodiment 1;
FIG. 6 is a diagram illustrating an effect acquired when partial range search according to Embodiment 1 is applied to optical SAW filter design;
FIG. 7 is a functional block diagram illustrating a configuration of an information processing apparatus according to Embodiment 2;
FIG. 8 is a diagram illustrating an example of the eigen solution information table according to Embodiment 2;
FIG. 9 is a diagram illustrating another example using the eigen solution prediction according to Embodiments 1 and 2;
FIG. 10 is a diagram illustrating an example of a flowchart for structure design with evolutionary computation according to another example;
FIG. 11 is a diagram illustrating an example of a computer that executes an information processing program;

FIG. 12 is a diagram illustrating a reference example of an SAW intensity distribution with an optical SAW filter having a highest SAW application efficiency;

FIG. 13 is a diagram illustrating a reference example exhibiting a relationship between an SAW intensity distribution and an eigen solution;

FIG. 14 is a diagram illustrating a reference example of a flowchart for structure design with evolutionary computation; and

FIG. 15 is a supplementary diagram for description of the structure design with evolutionary computation.

[ADVANTAGEOUS EFFECTS OF INVENTION]

In one aspect, it is possible to reduce the amount of computational complexity of the repetitions for acquiring eigen solutions in evolutionary computation.

DESCRIPTION OF EMBODIMENTS

However, in the method in the past applying evolutionary computation for designing an optimum structure, the amount of computational complexity of the evolutionary computation may not be reduced disadvantageously. In other words, for example, the method in the past calculates an eigen solution for acquiring the intensity distribution. In this case, a value of z that converges to zero (B1 = 0, An = 0) at both infinite distance is acquired by changing the value of z for the eigen equations expressed by Expressions (1) and (2). In other words, for example, in the method in the past, in order to acquire an eigen solution, a value of z that converges to zero is repeatedly calculated by changing the value of z in the entire possible range of an eigen solution. This therefore takes a large amount of computational complexity for acquiring an eigen solution, which means that the entire amount of computational complexity of evolutionary computation may not be reduced.

It is desirable to reduce the amount of computational complexity of the repetitions for acquiring eigen solutions in evolutionary computation.

Embodiments of an information processing apparatus, an information processing program and an information processing method disclosed herein will be described in detail with reference to drawings. In description of the embodiments, an optimum arrangement (structure design) of optical signaling channels with an optical SAW filter having a highest SAW application efficiency is to be acquired by evolutionary computation. However, the present disclosure is not limited to the embodiments.

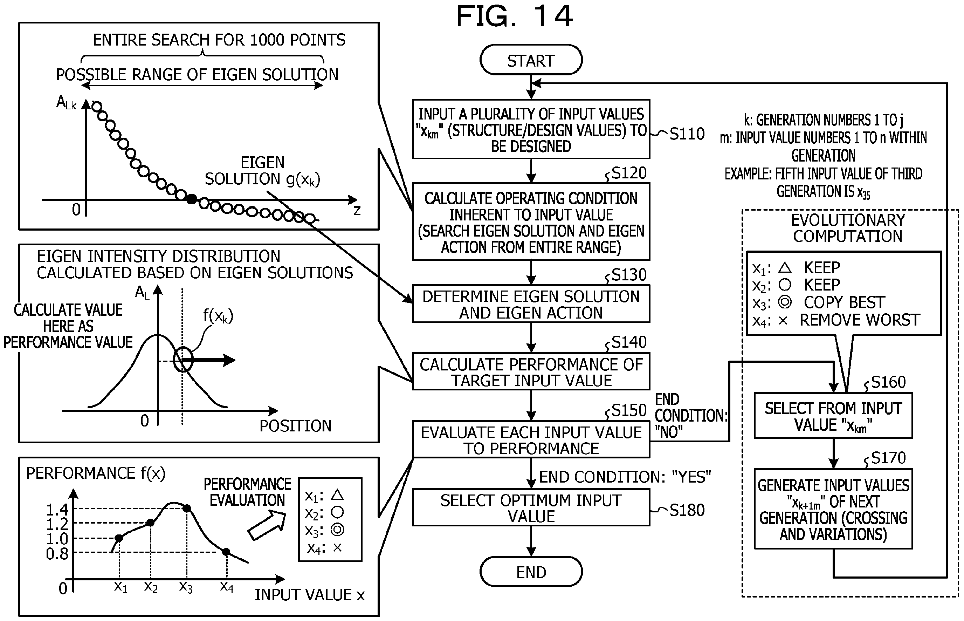

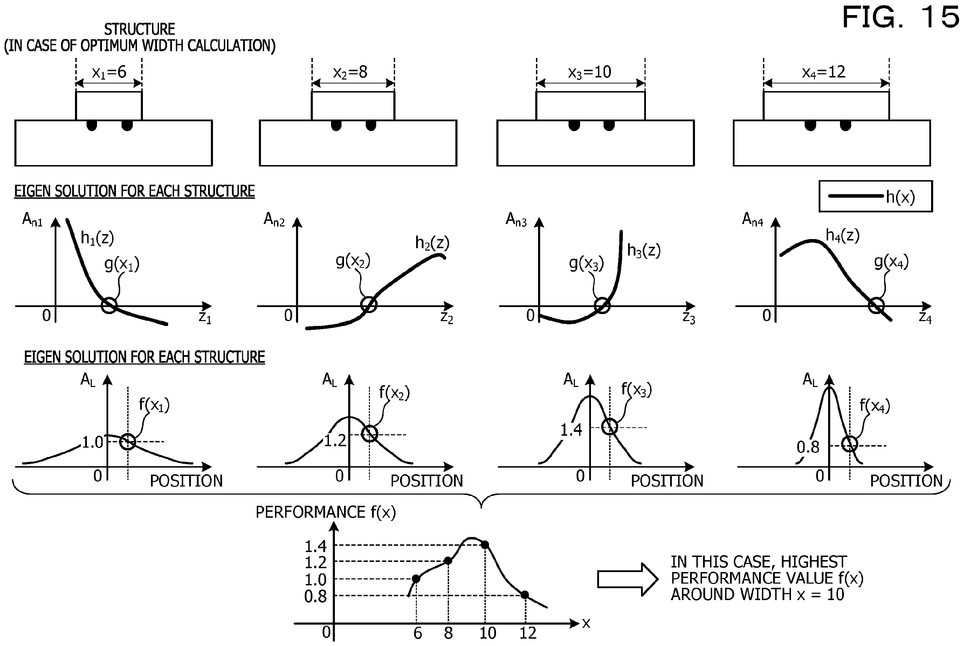

First, a reference example of a flowchart for structure design with evolutionary computation will be described with reference to FIG. 14. FIG. 14 is a diagram illustrating a reference example of a flowchart for structure design with evolutionary computation. The flowchart in FIG. 14 will be described with reference to the supplementary drawing in FIG. 15.

As illustrated in FIG. 14, an information processing apparatus obtains structures to be designed as input values $x_{km}$ (step S110). k indicates a generation, and m indicates an input value number within the generation. For example, as illustrated in the first row in FIG. 15, in order to calculate an optimum width, input values within a certain generation are "6" as $x_1$, "8" as $x_2$, "10" as $x_3$, and "12" as $x_4$.

The information processing apparatus calculates an operating condition inherent to each of the input values $x_{km}$ (step S120). In other words, for example, when $A_1 = 1$ and $B_1 = 0$ of the eigen solution condition in Expression (2) are input, a function for acquiring $A_n$ is expressed as h(z). Because $A_n$ is h(z) and because of the condition $A_n = 0$, a condition acquired by solving the equation resulting in $A_n$ or h(z) equal to zero is an eigen solution g(z). Such an equation is called an "eigen equation". Because h(z) depends on the structure, it varies in accordance with the input value $x_{km}$. If the possible range of the eigen solution is 1000 points that z may take, the information processing apparatus searches eigen solutions and eigen actions for all of the 1000 points.

The information processing apparatus determines eigen solutions and eigen actions (step S130). In other words, for example, the point z resulting in h(z) equal to zero is determined as an eigen solution g(z). For example, as illustrated in the second row of FIG. 15, eigen solutions $g(x_1)$, $g(x_2)$, $g(x_3)$, and $g(x_4)$ for the input values of the structures are determined. As illustrated in the third row of FIG. 15, the SAW intensity distributions for the input values of the structures are determined as eigen actions. Each of the SAW intensity distributions is represented by a graph having a position of an optical signaling channel as an x axis and an SAW intensity as a y axis. The SAW intensity distribution as an eigen action is determined based on an eigen solution.

The information processing apparatus calculates a performance of a target input value (step S140). For example, as illustrated in the third row of FIG. 15, the information processing apparatus calculates, as a performance value, an SAW intensity corresponding to the position of the optical signaling channel of each of the structures from the SAW intensity distribution for the input value being each of the structures. When the input value is $x_1$, "1.0" is calculated as a performance value $f(x_1)$. When the input value is $x_2$, "1.2" is calculated as a performance value $f(x_2)$. When the input

value is $x_3$, "1.4" is calculated as a performance value $f(x_3)$. When the input value is $x_4$, "0.8" is calculated as a performance value $f(x_4)$.

The information processing apparatus evaluates the performances corresponding to the input values (step S150). For example, as illustrated in the fourth row of FIG. 15, the performance value is 1.0 for the input value $x_1$ (= 6). For the input value $x_2$ (= 8), the performance value is 1.2. For the input value $x_3$ (= 10), the performance value is 1.4. For the input value $x_4$ (= 12), the performance value is 0.8. Therefore, in this case, the part in which the width indicated by x is around "10" is evaluated as producing the best performance value $f(x)$.

If the end condition is not satisfied, the information processing apparatus selects the input values based on the evaluation results (step S160). For example, the information processing apparatus keeps the input value $x_3$ (= 10), the input value $x_1$ (= 6) and the input value $x_2$ (= 8) having good performance values, and removes the input value $x_4$ (= 12) with the worst performance value.

The information processing apparatus generates input values $x_{k+1m}$ of the next generation (step S170). For example, the information processing apparatus crosses the selected input values and changes the crossed input values to generate the input values of the next generation. The information processing apparatus evaluates the performances for the input values of the next generation.

If the end condition is satisfied, the information processing apparatus selects an optimum input value based on the evaluation result (step S180).

In the processing of the evolutionary computation for selecting such an optimum structure design, the information processing apparatus calculates an eigen solution for acquiring an SAW intensity distribution. In this case, the information processing apparatus searches an eigen solution for all points in the possible range of the eigen solution. The information processing apparatus therefore takes a large amount of computational complexity of the repetitions for acquiring an eigen solution, which means that the entire amount of computational complexity of evolutionary computation may not be reduced.

Accordingly, according to the following embodiments, an information processing apparatus will be described which may reduce the amount of computational complexity of evolutionary computation.

[Embodiment 1]

[Configuration of Information Processing Apparatus]

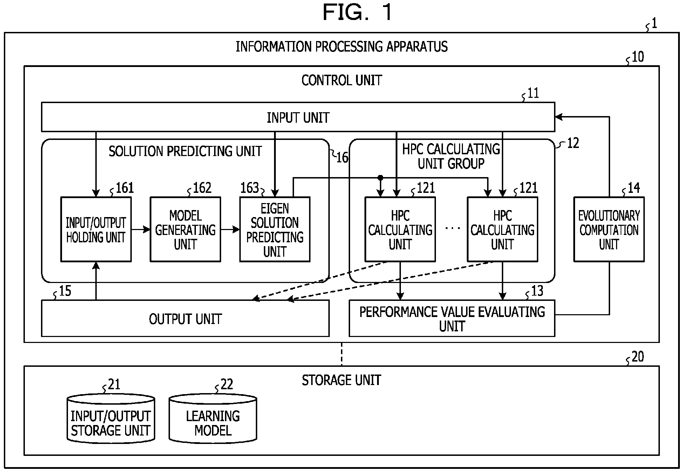

FIG. 1 is a functional block diagram illustrating a configuration of an information processing apparatus according to Embodiment 1. An information processing apparatus 1 illustrated in FIG. 1 executes evolutionary computation that evolves every generation to select an optimum structure design. In order to compute an eigen solution for an eigen equation depending on a structure design of a certain first generation, the information processing apparatus 1 calculates function values of a function in the eigen equation as first plural function values for partial input parameters of a plurality of input parameters. The information processing apparatus 1 predicts eigen solution candidates from the first plural function values based on combinations of second plural function values for the partial input parameters and eigen solutions calculated from the plurality of input parameters in a plurality of generations before the first generation. The information processing apparatus 1 searches an eigen solution for the eigen equation in vicinity of the input parameters corresponding to the predicted eigen solution candidates.

In other words, for example, the inventor focused on a fact that a form of a function in the eigen equation (corresponding to function values for partial input parameters) and eigen solutions are correlated. The inventor attempted to find a true eigen solution by using repetitions inherent to evolutionary computation, predicting eigen solutions for a new eigen equation from function values for partial specific input parameters in the past and searching in vicinity of the predicted solutions.

An eigen equation, a function in an eigen equation and an eigen solution are defined as follows. It is assumed that, when $A_1$ = 1 and $B_1$ = 0 of the eigen solution condition in Expression (2) are input, a function for acquiring $A_n$ is expressed as h(z), for example. h(z) is defined as the "function in an eigen equation". From the condition $A_n$ = 0, the equation resulting in $A_n$ or h(z) equal to zero is defined as the "eigen equation". The condition for solving the equation resulting in zero is defined as the "eigen solution".

The information processing apparatus 1 has a control unit 10 and a storage unit 20.

The control unit 10 corresponds to an electronic circuit such as a central processing unit (CPU). The control unit 10 has an internal memory for storing programs defining various processing procedures or control data and executes various processing using the programs and data. The control unit 10 has an input unit 11, a high-performance computing (HPC) calculating unit group 12, a performance value evaluating unit 13, an evolutionary computation unit 14, an output unit 15, and a solution predicting unit 16.

The storage unit 20 is, for example, a semiconductor memory device such as a random-access memory (RAM) or a flash memory or a storage device such as a hard disk or an optical disk. The storage unit 20 has an input/output storage unit 21 and a learning model 22.

The input/output storage unit 21 stores, in association, a form of a function in an eigen equation for a past input value (structure design), an eigen solution, and an output value (performance value). As a specific example illustrating a form of a function in an eigen equation, a form is provided which is acquired from a function value of h(z) for a plurality of specific z values when the function in the eigen equation "h(z) = 0" is h(z). The input/output storage unit 21 is held by an input/output holding unit 161, which will be described below.

The learning model 22 is a model resulting from learning such that a range of the eigen solution corresponding to a form of a function in a new eigen equation is acquired by using forms of functions in eigen equations for past input values (structure designs) and eigen solutions corresponding to the eigen equations. The learning model 22 learns by a method using a neural network (NN), for example. The learning model 22 is generated by a model generating unit 162, which will be described below.

The input unit 11 outputs a plurality of input values to be designed and to be used for generating the learning model 22 to an HPC calculating unit 121, which will be described below, and the input/output holding unit 161, which will be described below. The input unit 11 outputs a plurality of input values to be designed for predicting an eigen solution by using the learning model 22 to an eigen solution predicting unit 163, which will be described below.

The HPC calculating unit group 12 has a plurality of HPC calculating units 121. Hereinafter, one HPC calculating unit 121 will be described.

The HPC calculating unit 121 receives an input value to be designed of a predetermined generation and acquires an eigen solution for an eigen equation for the input value. In other words, for example, the HPC calculating unit 121 searches an eigen solution satisfying an eigen solution condition (Expression (2)) for an input value from an entire possible range of the eigen solution. Hereinafter, the search for an eigen solution satisfying an eigen solution condition from an entire range will be called "entire range search". For example, for a function h(z) for acquiring $A_n$ when $A_1 = 1$ and $B_1 = 0$ in the eigen solution condition of Expression (2) are input, the HPC calculating unit 121 solves an eigen equation resulting in $A_n$ or h(z) equal to zero because of a condition of $A_n = 0$. The condition for solving the eigen equation resulting in zero is an eigen solution g(z). The possible range of the eigen solution is all possible points of z. Therefore, the HPC calculating unit 121 searches an eigen solution resulting in h(z) equal to zero at all possible points of z. The HPC calculating unit 121 outputs the eigen solution for the input value, which is searched by the entire range search, to an output unit 15, which will be described below. In addition, the HPC calculating unit 121 outputs function values for a plurality of predetermined specific z values to the output unit 15, which will be described below, as forms of h(z).

The HPC calculating unit 121 calculates an SAW intensity distribution (eigen action) as an objective function based on the eigen solution. For example, the HPC calculating unit 121 calculates an SAW intensity distribution corresponding to the eigen solution based on Expression (1). The HPC calculating unit 121 substitutes the eigen solution for Neff in Expression (1) to calculate an SAW intensity distribution corresponding to the eigen solution. The HPC calculating unit 121 calculates an SAW intensity corresponding to an input value as a performance value by using the SAW intensity distribution for the input value. The HPC calculating unit 121 outputs the performance value for the input value to the output unit 15, which will be described below.

The performance value evaluating unit 13 calculates a performance value corresponding to each input value for each input value. The performance value evaluating unit 13 evaluates the performance of each input value based on the performance value for each input value. The performance value evaluating unit 13 finally selects an optimum input value based on the results of the performance evaluations on the input values.

The evolutionary computation unit 14 selects input values to be kept from a plurality of input values based on the evaluation results of the performances of input values. The evolutionary computation unit 14 crosses the selected input values and changes the crossed input value to generate the input values of the next generation. The evolutionary computation unit 14 outputs the input values of the next generation to the input unit 11.

The output unit 15 outputs results of solutions of the eigen equations and performance values for input values, which are output from the HPC calculating units 121, to the input/output holding unit 161, which will be described below. The expression "results of solutions of the eigen equations" refers to eigen solutions of the eigen equations and function values of the functions in the eigen equations for a plurality of specific z values. The "eigen solution" here refers to an eigen solution searched by the entire range search. Each of the function values for a plurality of specific z values refers to a form of the function h(z) in the eigen equation.

The solution predicting unit 16 has the input/output holding unit 161, the model generating unit 162, and the eigen solution predicting unit 163.

The input/output holding unit 161 holds past input values (structure designs), results of solutions of eigen equations for the input values and performance values in association in the input/output storage unit 21. In other words, for example, the input/output holding unit 161 accumulates results of solutions for eigen equations for past input values. The expression "results of solutions of the eigen equations" refers to eigen solutions of the eigen equations and function values of the functions in the eigen equations for a plurality of specific z values, as described above. The "eigen solution" here refers to an eigen solution searched by the entire range search.

The model generating unit 162 generates the learning model 22 that predicts the range of the eigen solutions for eigen equations for input values based on results of solutions for eigen equations for the input values. For example, the model generating unit 162 causes a neural network (NN) to learn function values for the plurality of specific z values of the functions and eigen solutions searched by the entire range search in the eigen equations for input values, which are accumulated in the input/output storage unit 21. The model generating unit 162 generates the learning model 22 that predicts a range of the eigen solution for the eigen equation for an input value.

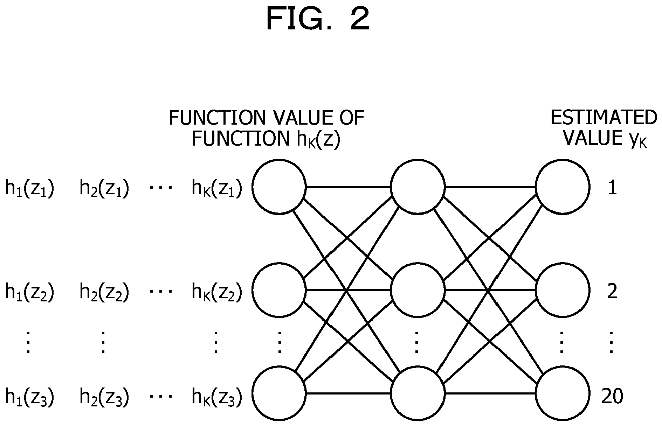

The model generation by the model generating unit 162 will be described with reference to FIG. 2. FIG. 2 is a diagram illustrating the model generation according to Embodiment 1. As illustrated in FIG. 2, the model generating unit 162 causes the NN to learn function values of a function $h_K(z)$ in the eigen equation ($h_K(z) = 0$) and estimated solutions $y_K$ to generate the learning model 22 that predicts an estimated solution $y_K$ for an eigen equation for an input value. The term "estimated solution $y_K$" refers to a range of an eigen solution. K indicates a number for identifying an input value without consideration of a generation. K may be a number in consideration of a generation and may be written as km (where k: generation and m: input value number within the generation).

For the z value of the function $h_K(z)$ to be used for predicting the solution of the eigen equation, a plurality of predetermined specific z values may be used, for example. A plurality of predetermined specific z values are used so that an estimated solution is predicted under the same rule for all input values. As the plurality of specific z values, fixed values of predetermined $z_1$, $z_2$ and $z_3$ are used. In FIG. 2, three points are used. However, the embodiment is not limited to the three points, but four or five points may be used.

Referring back to FIG. 1, the eigen solution predicting unit 163 uses the learning model 22 to predict the range (solution candidate range) of the eigen solution for the eigen equation for an input value. For example, the eigen solution predicting unit 163 inputs to the learning model 22 the function values for the plurality of specific z values used for the prediction of the function in the eigen equation for an input value to be predicted. The eigen solution predicting unit 163 outputs the range of the eigen solution corresponding to the input function value from the learning model 22. The range of the eigen solution corresponds to the estimated solution $y_K$ of the eigen equation.

The eigen solution predicting unit 163 searches an eigen solution for the eigen equation in the predicted range of the eigen solution. Hereinafter, the search for an eigen solution in an eigen solution range will be called "partial range search".

For example, a function h(z) for acquiring $A_n$ when $A_1 = 1$ and $B_1 = 0$ in the eigen solution condition of Expression (2) are input, the eigen solution predicting unit 163 solves an eigen equation resulting in $A_n$ or h(z) equal to zero because of a condition of $A_n = 0$. The condition for solving the eigen equation resulting in zero is an eigen solution g(z). The range of z for solving the eigen equation resulting in zero is the predicted eigen solution range (partial range). The eigen solution predicting unit 163 searches an eigen solution at points within the predicted eigen solution range (partial range). In other words, for example, the eigen solution predicting unit 163 substitutes values of z within the eigen solution range sequentially for the function h(z) and predicts the value of z resulting in zero as an eigen solution.

If the eigen solution prediction succeeds, the eigen solution predicting unit 163 outputs the eigen solution along with the input value to the HPC calculating unit 121. This is for causing the HPC calculating unit 121 to calculate an SAW intensity distribution (eigen action) of the eigen solution for the input value and to calculate the performance value for the input value. On the other hand, if the eigen solution prediction fails, the eigen solution predicting unit 163 outputs the input value for the eigen solution resulting from the prediction failure to the HPC calculating unit 121. This is for causing the HPC calculating unit 121 to acquire an eigen solution for the input value by the entire range search.

[Description of Eigen Solution Prediction]

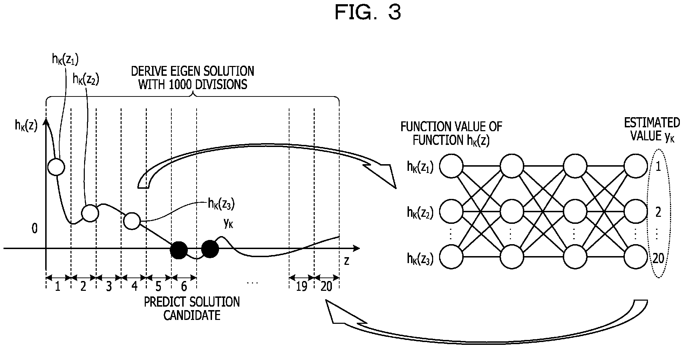

The eigen solution prediction by the eigen solution predicting unit 163 will be described with reference to FIG. 3. FIG. 3 is a diagram illustrating the eigen solution prediction according to Embodiment 1. In FIG. 3, the solution candidate range is divided into 20 ranges for 50 points acquired by dividing 1000 points by 20.

First, by using the learning model 22 illustrated on the right side of FIG. 3, the eigen solution predicting unit 163 predicts a solution candidate range of the eigen equation for a certain input value $x_K$. In other words, for example, the eigen solution predicting unit 163 inputs to the learning model 22 the function values for the plurality of specific z values used for the prediction of the function $h_K(z)$ in the eigen equation. It is assumed here that a plurality of specific z values used for the prediction is $z_1$, $z_2$ and $z_3$. The function values input to the learning model 22 are $h_K(z1)$, $h_K(z2)$ and $h_K(z3)$. The eigen solution predicting unit 163 outputs the range (solution candidate range) of the eigen solution corresponding to the input function value or the estimated solution $y_K$ from the learning model 22.

Next, as illustrated on the left side of FIG. 3, the eigen solution predicting unit 163 searches an eigen solution for the eigen equation for the input value within a predicted solution candidate range. It is assumed here that the predicted solution candidate range is "6". For a function $h_K(z)$ for acquiring $A_n$ when $A_1 = 1$ and $B_1 = 0$ in the eigen solution condition of Expression (2) are input, the eigen solution predicting unit 163 solves an eigen equation ($h_K(z) = 0$) resulting in $A_n$ or $h_K(z)$ equal to zero because of a condition of $A_n = 0$ in the range where the solution candidate range exhibits "6". In other words, for example, the eigen solution predicting unit 163 substitutes values of z within the range indicated by the solution candidate range "6" for the function $h_K(z)$. If the function $h_K(z)$ results in zero with one of z values within the range where the solution candidate range exhibits "6" or if the eigen solution prediction succeeds, the eigen solution predicting unit 163 predicts the z value with which the function $h_K(z)$ results in zero as an eigen solution. Thus, compared with the case of the entire range search that searches all points within a possible range of a solution, the eigen solution predicting unit 163 may search only in the 1/20 range, which may reduce the amount of computational complexity to 1/20.

If the function $h_K(z)$ does not result in zero with z values within the solution candidate range or if the eigen solution prediction fails, the eigen solution predicting unit 163 may cause the HPC calculating unit 121 to acquire an eigen solution by the entire range search.

[Flowchart of Model Generation]

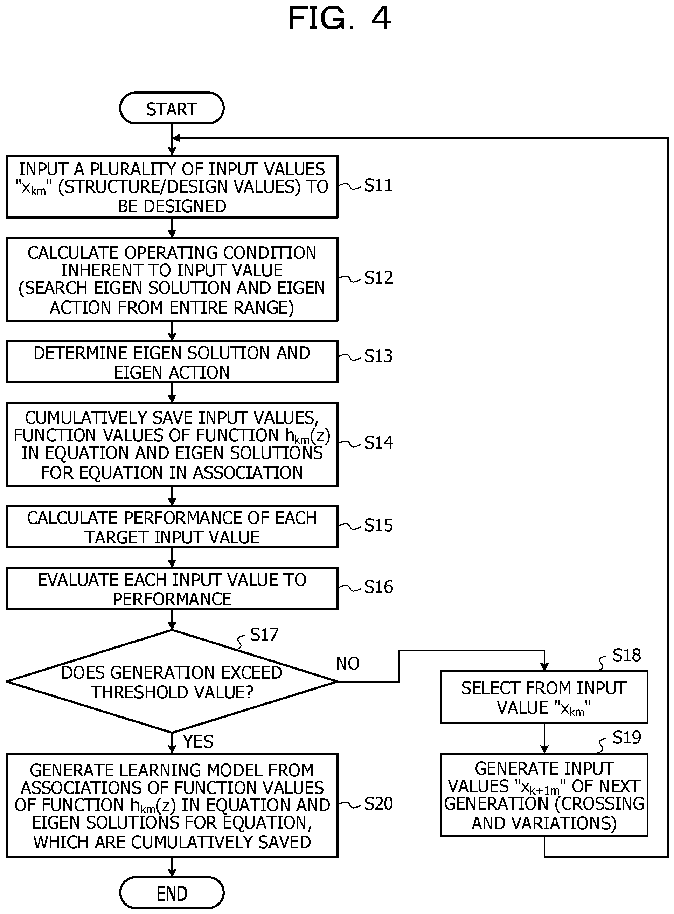

FIG. 4 is a diagram illustrating an example of a flowchart for the model generation according to Embodiment 1. In km, k indicates a generation, and m indicates an input value number within the generation. The initial value of the generation k is assumed to be "1".

As illustrated in FIG. 4, the input unit 11 inputs a plurality of input values "$x_{km}$" to be designed (structures/design values) (step S11).

The HPC calculating unit 121 calculates an eigen operating condition for each of the input values "$x_{km}$" (step S12). For example, for a function $h(z)$ for acquiring $A_n$ when $A_1 = 1$ and $B_1 = 0$ in the eigen solution condition of Expression (2) are input, the HPC calculating unit 121 solves, for each of the input values, an eigen equation resulting in $A_n$ or $h(z)$ equal to zero because of a condition of $A_n = 0$. In other words, for example, the HPC calculating unit 121 solves the eigen equation resulting in $A_n$ or the function $h_{km}(z)$ equal to zero with respect to all possible points of z for each of the input values.

The HPC calculating unit 121 determines the eigen solution and the eigen action for each of the input values (step S13). For example, the HPC calculating unit 121 determines, as an eigen solution, the value of z with which the eigen equation ($h_{km}(z) = 0$) is solved to zero for each of the input values. Based on Expression (1), the HPC calculating unit 121 calculates, as an eigen action, an SAW intensity distribution corresponding to the determined eigen solution. The HPC calculating unit 121 substitutes the eigen solution for Neff in Expression (1) to calculate an SAW intensity distribution corresponding to the eigen solution.

The input/output holding unit 161 cumulatively saves the input values, the function values of the function $h_{km}(z)$ in the eigen equation, and the eigen solutions for the eigen equation in the input/output storage unit 21 (step S14). The function values of the function $h_{km}(z)$ are function values for a plurality of predetermined specific z values.

The performance value evaluating unit 13 calculates the performances of the input values (step S15). For example, the performance value evaluating unit 13 calculates, as a performance value, an SAW intensity corresponding to the position of the optical signaling channel of each of the structures indicated by the input values from the SAW intensity distribution for each of the input values. The performance value evaluating unit 13 evaluates the performances of the input values based on the performance values of the input values (step S16).

The performance value evaluating unit 13 determines whether the current generation exceeds a threshold value or not (step S17). If it is determined that the current generation does not exceed the threshold value (No in step S17), the evolutionary computation unit 14 selects input values from the current input values "$x_{km}$" based on the evaluation results (step S18).

The evolutionary computation unit 14 generates input values "$x_{k+1m}$" of the next generation (step S19). For example, the evolutionary computation unit 14 crosses the selected input values and changes the crossed input value to generate the input values of the next generation. The evolutionary computation unit 14 moves to step S11 for processing on the next generation.

On the other hand, if it is determined that the current generation exceeds the threshold value (Yes in step S17), the model generating unit 162 performs the following processing. The model generating unit 162 generates the learning model 22 that predicts in which range the eigen solution for a new input value exists by associating the function values of the function $h_{km}(z)$ for the eigen equation and the eigen solutions for the eigen equation with the cumulatively saved input values (step S20). The model generation processing ends.

[Flowchart for Evolutionary Computation]

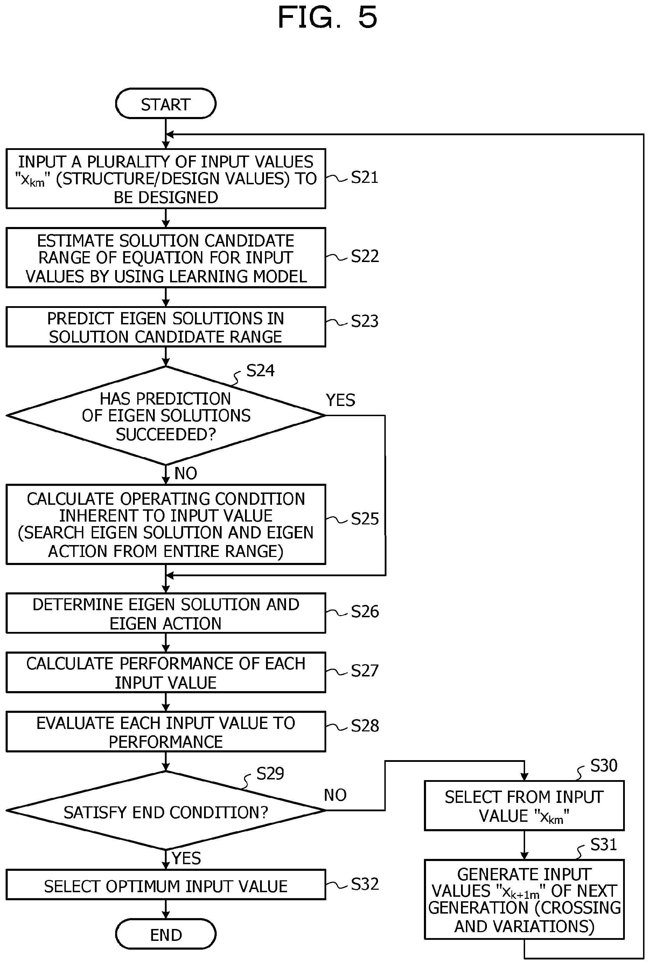

FIG. 5 is a diagram illustrating an example of a flowchart for evolutionary computation according to Embodiment 1. The initial value of the generation k is assumed to be the number of generations + 1 used for the model generation.

As illustrated in FIG. 5, the input unit 11 inputs a plurality of input values "$x_{km}$" to be designed (structures/design values) (step S21).

By using the learning model 22, the eigen solution predicting unit 163 estimates a solution candidate range for an eigen solution for the input values "$x_{km}$" (step S22). For example, the eigen solution predicting unit 163 inputs to the learning model 22 the function values for the plurality of specific z values used for the prediction of the function $h_{km}(z)$ in the eigen equation for each of the input values "$x_{km}$". The eigen solution predicting unit 163 outputs the range of the eigen solution (solution candidate range) corresponding to the input function values from the learning model 22.

The eigen solution predicting unit 163 predicts an eigen solution in the solution candidate range (step S23). For example, the eigen solution predicting unit 163 substitutes values of z within the estimated eigen solution range sequentially for the equation ($h_{km}(z) = 0$) and predicts the value of z resulting in zero as an eigen solution.

The eigen solution predicting unit 163 determines whether the eigen solution prediction has succeeded or not (step S24). If it is determined that the eigen solution prediction has succeeded (Yes in step S24), the eigen solution predicting unit 163 moves to step S26.

On the other hand, if it is determined that the eigen solution prediction has not succeeded (No in step S24), the HPC calculating unit 121 calculates an eigen operating condition for the input values "$x_{km}$" (step S25). For example, when $A_1 = 1$ and $B_1 = 0$ of the eigen solution condition in Expression (2) are input, the HPC calculating unit 121 calculates the function $h_{km}(z)$ for acquiring $A_n$ for each of the input values. The HPC calculating unit 121 solves the eigen equation resulting in $A_n$ or $h_{km}(z)$ equal to zero with respect to all possible points of z because of the condition of $A_n = 0$ of the eigen solution condition in Expression (2) for each of the input values to predict an eigen solution. The HPC calculating unit 121 moves to step S26.

The HPC calculating unit 121 determines the eigen solution and the eigen action for each of the input values (step S26). For example, the HPC calculating unit 121 determines, as an eigen solution, the value of z with which the eigen equation is solved to zero for each of the input values. Based on Expression (1), the HPC calculating unit 121 calculates, as an eigen action, an SAW intensity distribution corresponding to the determined eigen solution. The HPC calculating unit 121 substitutes the eigen solution for Neff in Expression (1) to calculate an SAW intensity distribution corresponding to the eigen solution.

The performance value evaluating unit 13 calculates the performances of the input values (step S27). For example, the performance value evaluating unit 13 calculates, as a performance value, an SAW intensity corresponding to the position of the optical signaling channel of each of the structures indicated by the input values from the SAW intensity distribution for each of the input values. The performance value evaluating unit 13 evaluates the performances of the input values based on the performance values of the input values (step S28).

The performance value evaluating unit 13 determines whether an end condition is satisfied or not (step S29). If it is determined that the end condition is not satisfied (No in step S29), the evolutionary computation unit 14 selects input values from the current input values "$x_{km}$" based on the evaluation results (step S30).

The evolutionary computation unit 14 generates input values "$x_{k+1m}$" of the next generation (step S31). For example, the evolutionary computation unit 14 crosses the selected input values and changes the crossed input value to generate the input values of the next generation. The evolutionary computation unit 14 moves to step S21 for processing on the next generation.

On the other hand, if it is determined that the end condition is satisfied (Yes in step S29), the performance value evaluating unit 13 selects an optimum input value based on the results of the performance evaluations for the input values (step S32). The evolutionary computation processing ends.

[Effects When Applied to Optical SAW Filter Design]

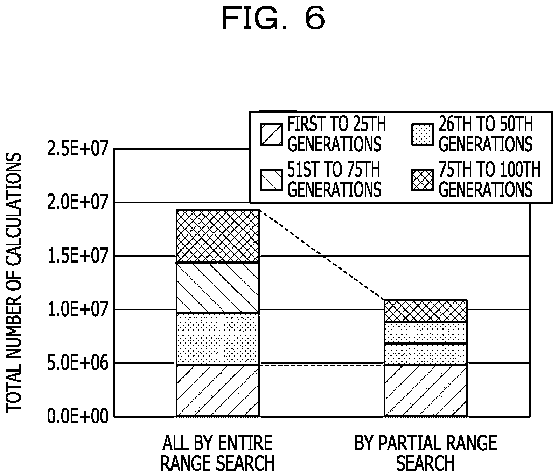

FIG. 6 is a diagram illustrating an effect acquired when partial range search according to Embodiment 1 is applied to optical SAW filter design. FIG. 6 illustrates an example of evolutionary computation in which there are 200 input values for one generation and 20000 input values of 100 generations are to be evaluated.

The graph illustrated in FIG. 6 illustrates a total number of calculations when an eigen solution is acquired by using the entire range search and a total number of calculations when an eigen solution is acquired by using the partial range search according to Embodiment 1.

In the partial range search according to Embodiment 1, the model generating unit 162 learned 5000 (200 input values × 25 generations) data pieces of the initial first to 25th generations to generate the learning model 22. In other words, for example, the eigen solution was acquired by the entire range search through the initial 5000 data pieces. For the 26th and subsequent generations from the 5001st data piece, the eigen solution predicting unit 163 predicted solution candidate ranges for input values by using the learning model 22, performed the partial range search in the predicted solution candidate range and acquired eigen solutions.

As illustrated in FIG. 6, though the total number of calculations in the first to 25th generations used as learning data by the partial range search according to Embodiment 1 is equal to that of the entire range search, the total number of calculations is reduced in the 26th and subsequent generations, compared with that of the first to 25th generations. In other words, for example, the information processing apparatus 1 may have a higher processing speed because of the predictions in the 26th and subsequent generations when the partial range search according to Embodiment 1 is used, and the amount of computational complexity of the evolutionary computation may be reduced.

It has been described that, for the z value of the function $h_K(z)$ to be used for predicting the solution of the eigen equation, a plurality of predetermined specific z values are used. For example, it has been described that, as the specific z values, fixed values of predetermined $z_1$, $z_2$ and $z_3$ are used. The fixed values may be three points selected from the minimum value of z or may be points at both ends of the entire possible range of z and a middle point thereof.

For the z value of the function $h_K(z)$ to be used for predicting the solution of the eigen equation, a plurality of predetermined specific z values may not be used. For example, it corresponds to a case where, though $z_1$, $z_2$ and $z_3$ are not fixed values, differences therebetween are fixed values. As an example, three points may be selected such that a difference "$z_1 - z_2$" and a difference "$z_2 - z_3$" are fixed values. Three points may be selected such that a difference "$z_1 - z_2$" and a difference "$2 \times (z_2 - z_3)$" are fixed values.

It has been described that the model generating unit 162 generates the learning model 22 that predicts the range in which the eigen solutions satisfying an eigen solution condition for input values exist based on the accumulated results of solutions of the eigen equations for the input values. The accumulated result of the eigen equations for input values to be used by the model generating unit 162 may be information in the first generation to the (n-1)th generation, for example, when the prediction is performed by using the learning model 22 from the nth generation (n: an integer equal to or higher than 3). The information may not be from the first generation but may be, for example, information in the immediately preceding several generations of the n generations for the prediction. In this case, the model generating unit 162 may update the learning model 22 in accordance with the generation for the prediction.

[Effects of Embodiment 1]

According to Embodiment 1, the information processing apparatus 1 executes evolutionary computation that calculates an eigen solution of an equation by using a plurality of input parameters. In order to calculate an eigen solution of an equation of a first generation, the information processing apparatus 1 calculates a function value of a function in the equation as first plural function values for partial input parameters of a plurality of input parameters. The information processing apparatus 1 predicts eigen solution candidates for the first plural function values based on combinations of second plural function values for the partial input parameters and eigen solutions calculated by using the plurality of input parameters in a plurality of generations before the first generation. The information processing apparatus 1 calculates a solution of an equation in vicinity of the input parameters corresponding to the predicted eigen solution candidates. With this configuration, the information processing apparatus 1 in the evolutionary computation predicts eigen solution candidates and searches a solution in vicinity of the eigen solution candidates for calculating an eigen solution of the equation in a certain first generation so that the amount of computational complexity of the repetitions in the search for the eigen solution may be reduced.

According to Embodiment 1 described above, the information processing apparatus 1 predicts the range of eigen solutions for the first plural function values as eigen solution candidates. The information processing apparatus 1 searches an eigen solution for the equation in the range of the eigen solution predicted as eigen solution candidates. With this configuration, the information processing apparatus 1 searches an eigen solution of the equation in the eigen solution range so that the amount of computational complexity of the repetitions for searching an eigen solution may be reduced.

According to Embodiment 1, the information processing apparatus 1 generates the learning model 22 that predicts an eigen solution range based on combinations of second plural function values for the partial input parameters of each generation and eigen solutions in a plurality of generations before the first generation. The information processing apparatus 1 predicts the range of eigen solutions for the first plural function values as eigen solution candidates by using the learning model 22. With this configuration, the information processing apparatus 1 predicts the range of an eigen solution by using the learning model 22 so that the amount of computational complexity for calculating an eigen solution may be reduced. As a result, the information processing apparatus 1 may reduce the entire amount of computational complexity of the evolutionary computation.

[Embodiment 2]

According to Embodiment 1, it has been described that the information processing apparatus 1 generates the learning model 22 that predicts in which range an eigen solution of an eigen equation for an input value exists based on combinations of a plurality of function values of the functions in the eigen equations for input values of a plurality of generations and the eigen solutions. The information processing apparatus 1 predicts an estimated solution for the eigen solution of the eigen equation for an input value by using the generated learning model 22 with respect to the input values of a new generation. The term "estimated solution" refers to a solution candidate range of an eigen solution. However, the information processing apparatus 1 may generate a table storing a plurality of function values of a function in an eigen equation for input values of a plurality of generations and estimated solutions of the eigen solution in association, without limiting to the learning model 22. The information processing apparatus 1 predicts an estimated solution for the eigen solution of the eigen equation for input values of a new generation by using the generated table.

According to Embodiment 2, a case will be described in which the information processing apparatus 1 predicts an estimated solution for an eigen solution of an eigen equation for input values of a new generation by using a table storing a plurality of function values of a function in eigen equations for input values and estimated solutions of the eigen solutions in association.

[Configuration of Information Processing Apparatus]

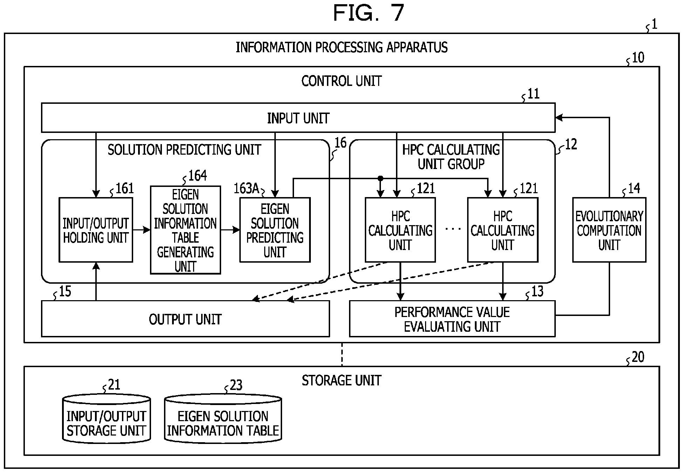

FIG. 7 is a functional block diagram illustrating a configuration of an information processing apparatus according to Embodiment 2. Elements of the information processing apparatus of FIG. 7 are designated with the same reference numerals as in the information processing apparatus 1 illustrated in FIG. 1, and the discussion of the identical elements and operation thereof is omitted herein. Embodiment 1 and Embodiment 2 are different in that the model generating unit 162 is replaced by an eigen solution information table generating unit 164. They are also different in that the eigen solution predicting unit 163 is replaced by an eigen solution predicting unit 163A. They are also different in that the learning model 22 is replaced by an eigen solution information table 23.

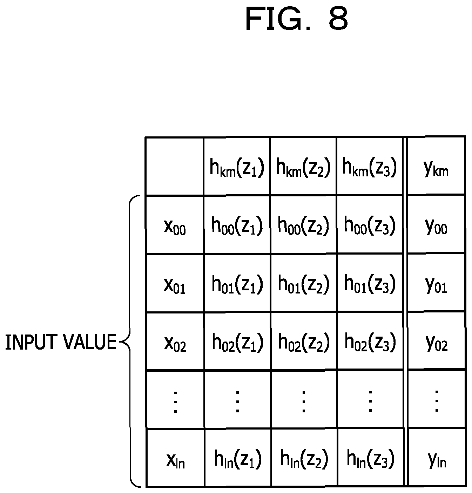

The eigen solution information table 23 is a table that stores estimated solutions for eigen solutions for a plurality of input values. An example of the eigen solution information table 23 will be described with reference to FIG. 8. FIG. 8 is a diagram illustrating an example of the eigen solution information table according to Embodiment 2. As illustrated in FIG. 8, the eigen solution information table 23 stores a plurality of function values of a function $h_{km}(z)$ in an eigen equation for an input value $x_{km}$ and an estimated solution $y_{km}$ for the eigen solution in association. k indicates a generation, and m indicates a number for identifying an input value within the generation. The expression "a plurality of function values" refers to function values for a plurality of specific z values. As the plurality of specific z values, fixed values of predetermined $z_1$, $z_2$ and $z_3$ are used. Three points are used. However, the embodiment is not limited to the three points, but four or five points may be used.

As an example, when the input value $x_{km}$ is $x_{02}$, $h_{02}(z1)$ as a function value for z1, $h_{02}(z2)$ as a function value for z2 and $h_{02}(z3)$ as a function value for z3 and $y_{02}$ as an estimated solution for the eigen solution are stored.

Referring back to FIG. 7, the eigen solution information table generating unit 164 generates the eigen solution information table 23. For example, the eigen solution information table generating unit 164 converts an eigen solution stored for each input value in the input/output storage unit 21 to a solution candidate range. The solution candidate range corresponds to the estimated solution $y_{km}$ for the eigen solution. The eigen solution information table generating unit 164 holds, in the eigen solution information table 23, a function value of a function in an eigen equation for each input value, which is stored in the input/output storage unit 21, and the converted solution candidate range in association.

The eigen solution predicting unit 163A predicts an eigen solution of an eigen equation for an input value by using the eigen solution information table 23.

For example, the eigen solution predicting unit 163A acquires a plurality of function values of a function in an eigen equation for input values of a new generation. The eigen solution predicting unit 163A predicts estimated solutions corresponding to the plurality of acquired function values by using the eigen solution information table 23. As an example, the eigen solution predicting unit 163A predicts an estimated solution corresponding to a function value that is the most approximate to the function value of the function in the eigen equation for an input value of a new generation. For example, a case is assumed in which a function value of a function $h_{km}$ for an input value $x_{km}$ of a new generation is the most approximate to a function value of the function $h_{02}$. In this case, the eigen solution predicting unit 163A predicts $y_{02}$ as an estimated solution $y'_{km}$ of the eigen equation for the input value $x_{km}$. As another example, when a function value for an input value of a new generation is approximate to function values for two input values, the eigen solution predicting unit 163A predicts a solution acquired by interpolating the two estimated solutions for the approximate function values as an estimated solution for the input value of the new generation. For example, a case is assumed in which a function value of a function $h_{km}$ for an input value $x_{km}$ of a new generation is approximate to function values of the function $h_{02}$ and a function $h_{53}$. In this case, the eigen solution predicting unit 163A predicts an average value of the estimated solution $y_{02}$ for the function value of the function $h_{02}$ and the estimated solution $y_{53}$ for the function value of the function $h_{53}$ as an estimated solution for the input value of the new generation.

The eigen solution predicting unit 163A searches an eigen solution of the eigen equation for the input value within the predicted estimated solution range. In other words, for example, the eigen solution predicting unit 163A substitutes values of z within the estimated solution range sequentially for the function h(z) and predicts the value of z resulting in zero as an eigen solution.

If the eigen solution prediction succeeds, the eigen solution predicting unit 163A outputs the eigen solution along with the input value to the HPC calculating unit 121. This is for causing the HPC calculating unit 121 to calculate an SAW intensity distribution (eigen action) of the eigen solution for the input value and to calculate the performance value for the input value. On the other hand, if the eigen solution prediction fails, the eigen solution predicting unit 163A outputs the input value for the eigen solution resulting from the prediction failure to the HPC calculating unit 121. This is for causing the HPC calculating unit 121 to acquire an eigen solution for the input value by the entire range search.

[Effects of Embodiment 2]

According to Embodiment 2, the information processing apparatus 1 generates the eigen solution information table 23 storing combinations of second plural function values for partial input parameters of each generation and ranges of eigen solutions in a plurality of generations before the first generation. The information processing apparatus 1 predicts the range of eigen solutions for the first plural function values as eigen solution candidates by using the eigen solution information table 23. With this configuration, the information processing apparatus 1 predicts the range of an eigen solution by using the eigen solution information table 23 so that the amount of computational complexity for calculating an eigen solution may be reduced. As a result, the information processing apparatus 1 may reduce the entire amount of computational complexity of the evolutionary computation.

[Another Example Using Eigen Solution Prediction]

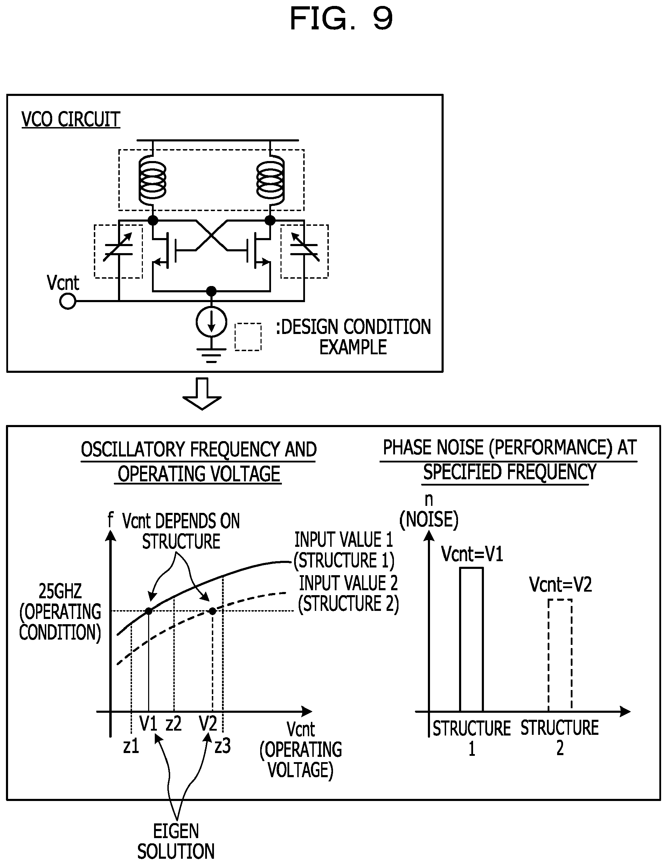

A case has been described in which an optical SAW filter is designed with the eigen solution prediction according to Embodiments 1 and 2. Another example using the eigen solution prediction according to Embodiments 1 and 2 will be described with reference to FIG. 9. FIG. 9 is a diagram illustrating another example using the eigen solution prediction according to Embodiments 1 and 2. With reference to FIG. 9, a case will be described in which a design of a voltage control oscillator (VCO) circuit is acquired by evolutionary computation.
The upper drawing of FIG. 9 illustrates a VCO circuit. Examples of design conditions are enclosed by broken lines.
The lower left diagram of FIG. 9 illustrates a relationship between oscillatory frequency and operating voltage. The VCO circuit is used by setting the operating voltage such that the oscillatory frequency operates at a specified value (such as 25.0 GHz) as a target value. In this case, 25.0 GHz is a specified value as the oscillatory frequency f. In a structure represented by an input value 1, when the VCO circuit operates with the specified value, the operating voltage indicates V1. In a structure represented by an input value 2, when the VCO circuit operates with the specified value, the operating voltage indicates V2. In this way, the operating voltage depends on the structure.
The lower right diagram of FIG. 9 illustrates phase noise at specified frequencies. The VCO circuit is not only to have an oscillatory frequency operating at a specified value but also to have small phase noise in a condition according to the specifications. In this case, the structure 2 represented by the input value 2 have lower phase noise than that of the structure 1 represented by the input value 1. This means that the structure 2 is a more optimum structure than the structure 1.
Under this design summary of the VCO circuit, input values (design conditions regarding a structure and parameter values) for an inductor and a variable capacitance are adjusted in the design process to search an optimum structure. However, when the input values are changed, the operating voltage for the input values changes. Therefore, the operating voltage (Vcnt) having the specified oscillatory frequency f is predicted every time in accordance with the input values, and the phase noise is to be evaluated under conditions based on the specifications.
Accordingly, for example, design conditions of the structure and parameters of the VCO circuit are associated with the "input value" according to Embodiment 1. The operating voltage under the specification condition for the input value is associated with the "eigen solution". The phase noise under the condition based on the specifications for the input value is associated with the evaluation value. For example a VCO may be designed by using the eigen solution prediction according to Embodiment 1 as follows.
The HPC calculating unit 121 receives an input value regarding a design condition of a predetermined generation and searches an operating voltage satisfying the specification condition for the input value through the possible entire range of the operating voltage.
Based on the oscillatory frequency for a plurality of specific operating voltages of functions for input values and operating voltage values which are searched by the entire range search (eigen solutions), the model generating unit 162 generates the learning model 22 that predicts the range of the operating voltage satisfying the specification condition for an input value. The term "function" here refers to a function expressed by an operating voltage and an oscillatory frequency.
The eigen solution predicting unit 163 predicts a range of operating voltages (eigen solutions) of an oscillatory frequency for a plurality of specific operating voltage values in functions for input values by using the learning model 22. The eigen solution predicting unit 163 predicts the operating voltage for an input value, which satisfies the specification condition for the input value, within the predicted operating voltage range. If the prediction of the operating voltage fails, the eigen solution predicting unit 163 may cause the HPC calculating unit 121 to search the operating voltage for the input value by performing the entire range search.
The performance value evaluating unit 13 calculates phase noise for the input value based on the predicted or searched operating voltage. The performance value evaluating unit 13 evaluates the phase noises (performances) of the input values based on the phase noises of the input values. The evolutionary computation unit 14 may evolve the input values based on the evaluation result of the phase noises of the input values, predict the operating voltages for the input values, and finally select an optimum input value.

[Flowchart for Evolutionary Computation]

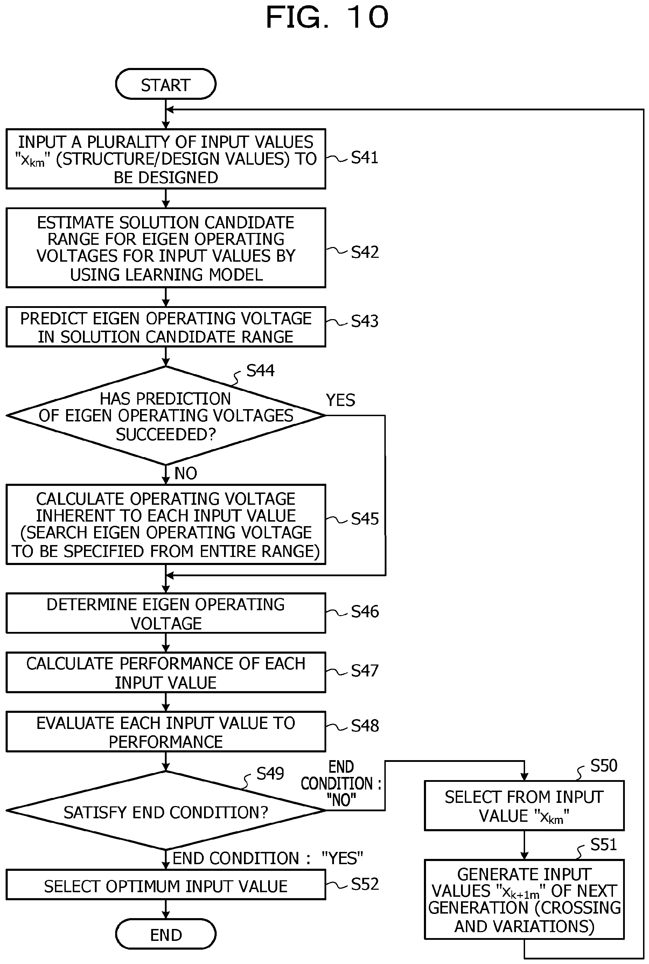

FIG. 10 is a diagram illustrating an example of a flowchart for evolutionary computation according to another example. The initial value of the generation k is assumed to be the number of generations + 1 used for the model generation.

As illustrated in FIG. 10, the input unit 11 inputs a plurality of input values "$x_{km}$" to be designed (structures/design values) (step S41).

By using the learning model 22, the eigen solution predicting unit 163 estimates a solution candidate range for eigen operating voltage for the input values (step S42). For example, the eigen solution predicting unit 163 inputs to the learning model 22 the function values for the plurality of specific z values used for the prediction of the function $h_{km}(z)$ expressed by an operating voltage and an oscillatory frequency for each of the input values "$x_{km}$". The eigen solution predicting unit 163 outputs the range of the operating voltage (solution candidate range) corresponding to the input function value from the learning model 22.

The eigen solution predicting unit 163 predicts an eigen operating voltage in the solution candidate range (step S43). For example, the eigen solution predicting unit 163 substitutes values of z within the estimated operating voltage range sequentially for the function and predicts the value of z that is an operating condition as an eigen solution.

The eigen solution predicting unit 163 determines whether the eigen operating voltage prediction has succeeded or not (step S44). If it is determined that the eigen operating voltage prediction has succeeded (Yes in step S44), the eigen solution predicting unit 163 moves to step S46.

On the other hand, if it is determined that the eigen operating voltage prediction has not succeeded (No in step S44), the HPC calculating unit 121 calculates eigen operating voltages for the input values "$x_{km}$" (step S45). In other words, for example, the HPC calculating unit 121 calculates an eigen operating voltage by searching an eigen operating voltage being a specification from the entire range. The HPC calculating unit 121 moves to step S46.

In step S46, the HPC calculating unit 121 determines the eigen operating voltage for each of the input values (step S46).

The performance value evaluating unit 13 calculates the performances of the input values (step S47). For example, the performance value evaluating unit 13 calculates phase noises from the eigen operating voltages for the input values. The performance value evaluating unit 13 evaluates the performances of the input values based on the phase noises of the input values (step S48).

The performance value evaluating unit 13 determines whether an end condition is satisfied or not (step S49). If it is determined that the end condition is not satisfied (No in step S49), the evolutionary computation unit 14 selects input values from the current input values "$x_{km}$" based on the evaluation results (step S50).

The evolutionary computation unit 14 generates input values "$x_{k+1m}$" of the next generation (step S51). For example, the evolutionary computation unit 14 crosses the selected input values and changes the crossed input value to generate the input values of the next generation. The evolutionary computation unit 14 moves to step S41 for processing on the next generation.

On the other hand, if it is determined that the end condition is satisfied (Yes in step S49), the performance value evaluating unit 13 selects an optimum input value based on the results of the performance evaluations for the input values (step S52). The evolutionary computation processing ends.

[Effects of Other Example]

Thus, the information processing apparatus 1 in designing a VCO predicts an operating voltage by using the range of the operating voltage for an input value satisfying the specification condition so that the entire amount of computational complexity of the evolutionary computation may be reduced. In other words, for example, if the search for the operating voltage (corresponding to the eigen solution) having a specified oscillatory frequency for each input value may be predicted, the information processing apparatus 1 may efficiently evaluate the input value (structure). Therefore, the amount of computational complexity used for designing a VCO may be reduced.

[Others]

The components of the information processing apparatus 1 illustrated in the drawings do not necessarily have to be physically configured as illustrated in the drawings. In other words, for example, the specific forms of distribution and integration of the information processing apparatus 1 are not limited to those illustrated in the drawings, and all or part thereof may be configured to be functionally or physically distributed or integrated in given units in accordance with various loads, usage states, and so on. For example, the output unit 15 and the input/output holding unit 161 may be integrated as one unit. The HPC calculating unit 121 may be divided into a calculating unit that searches an eigen solution by entire range search, a unit that calculates an objective function based on the eigen solution and a unit that calculates a performance value for an input value based on the objective function. The storage unit 20 may be coupled via a network as an external device of the information processing apparatus 1.

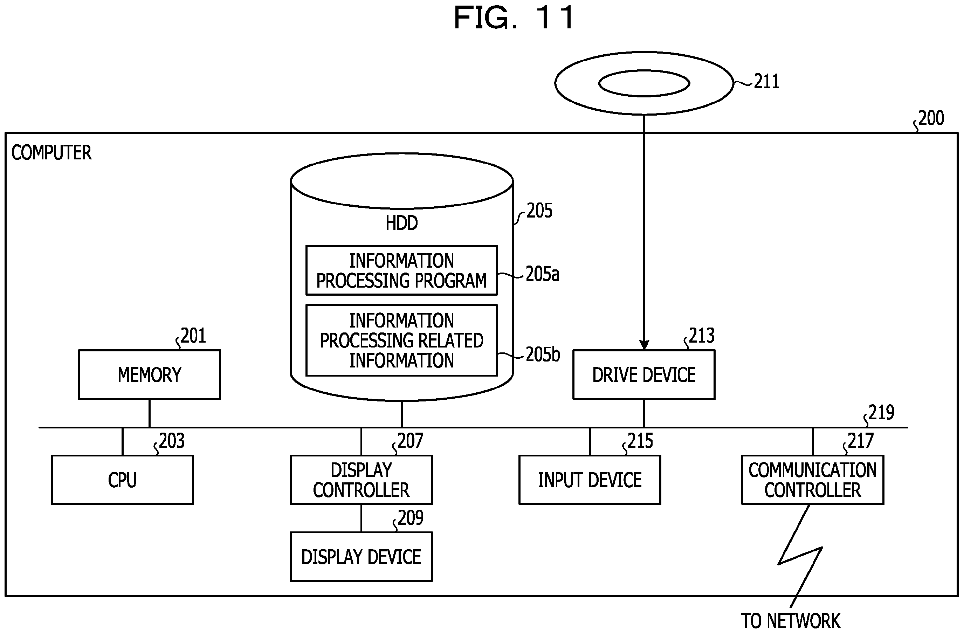

The various processes described in the embodiments above may be implemented as a result of a computer such as a personal computer or a workstation executing a program prepared in advance. Hereinafter, an example of a computer that executes an information processing program implementing functions that are the same as those of the information processing apparatus 1 illustrated in FIG. 1 will be described. FIG. 11 is a diagram illustrating an example of a computer that executes the information processing program.

As illustrated in FIG. 11, a computer 200 includes a CPU 203 that performs various kinds of arithmetic processing, an input device 215 that receives input of data from a user, and a display controller 207 that controls a display device 209. The computer 200 further includes a drive device 213 that reads a program or the like from a storage medium, and a communication controller 217 that exchanges data with another computer via a network. The computer 200 further includes a memory 201 that temporarily stores various kinds of information, and a hard disk drive (HDD) 205. The memory 201, the CPU 203, the HDD 205, the display controller 207, the drive device 213, the input device 215, and the communication controller 217 are coupled to one another via a bus 219.

The drive device 213 is, for example, a device for a removable disk 210. The HDD 205 stores an information processing program 205a and information processing related information 205b.

The CPU 203 reads the information processing program 205a, develops the information processing program 205a in the memory 201, and executes the information processing program 205a as processes. Such processes correspond to the respective functional units of the information processing apparatus 1. The information processing related information 205b corresponds to the input/output storage unit 21 and the learning model 22. For example, the removable disk 210 stores various information of the information processing program 205a or the like.

The information processing program 205a may not necessarily have to be stored in the HDD 205 from the beginning. For example, the information processing program 205a may be stored in a "portable physical medium" such as a flexible disk (FD), a compact disk read-only memory (CD-ROM), a digital versatile disk (DVD), a magneto-optical disk, or an integrated circuit (IC) card inserted into the computer 200. The computer 200 may execute the information processing program 205a by reading the information processing program 205a from the portable physical medium.

In any of the above aspects, the various features may be implemented in hardware, or as software modules running on one or more processors/computers.

The invention provides a computer program or a computer program product comprising instructions that, when executed by a computer, cause the computer to carry out any of the methods/method steps described herein, and a non-transitory computer-readable medium comprising instructions that, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1. An information processing apparatus that executes evolutionary computation for calculating an eigen solution of an equation by using a plurality of input parameters, the apparatus comprising:

   a first calculating unit configured to, in order to calculate an eigen solution of an equation of a first generation, calculate function values of a function in the equation as first plural function values for partial input parameters of the plurality of input parameters;
   a predicting unit configured to predict eigen solution candidates for the first plural function values based on combinations of second plural function values for the partial input parameters and eigen solutions calculated by using the plurality of input parameters in a plurality of generations before the first generation; and
   a second calculating unit configured to calculate a solution of the equation in vicinity of the input parameters corresponding to the eigen solution candidates predicted by the predicting unit.

2. The information processing apparatus according to claim 1,
   wherein the predicting unit is configured to predict a range of an eigen solution for the first plural function values as the eigen solution candidates, and

wherein the second calculating unit is configured to search an eigen solution for the equation in the range of the eigen solution predicted as the eigen solution candidates.

3. The information processing apparatus according to claim 1 or 2,
   wherein the predicting unit
   includes a generating unit configured to generate a model that predicts an eigen solution range based on combinations of the second plural function values for the partial input parameters for each generation and the eigen solutions in a plurality of generations before the first generation, and
   predicts a range of an eigen solution for the first plural function values as the eigen solution candidates by using the model.

4. The information processing apparatus according to claim 1 or 2,
   wherein the predicting unit
   includes a generating unit configured to generate a table storing combinations of the second plural function values for the partial input parameters for each generation and a range of the eigen solution in a plurality of generations before the first generation, and
   predicts a range of an eigen solution for the first plural function values as the eigen solution candidates by using the table.

5. The information processing apparatus according to any preceding claim,
   wherein the partial input parameters are a plurality of predetermined z values with respect to a function $h(z)$ in the equation.

6. A program for causing a computer to execute a process for evolutionary computation for calculating an eigen solution of an equation by using a plurality of input parameters, the process comprising:

   in order to calculate an eigen solution of an equation of a first generation, calculating function values of a function in the equation as first plural function values for partial input parameters of a plurality of input parameters;
   predicting eigen solution candidates for the first plural function values based on combinations of second plural function values for the partial input parameters and eigen solutions calculated by using the plurality of input parameters in a plurality of generations before the first generation; and
   calculating a solution of the equation in vicinity of input parameters corresponding to the predicted eigen solution candidates.

7. An information processing method executed by a computer for evolutionary computation for calculating an eigen solution of an equation by using a plurality of input parameters, the information processing method comprising:

   in order to calculate an eigen solution of an equation of a first generation, calculating function values of a function in the equation as first plural function values for partial input parameters of a plurality of input parameters;
   predicting eigen solution candidates for the first plural function values based on combinations of second plural function values for the partial input parameters and eigen solutions calculated by using the plurality of input parameters in a plurality of generations before the first generation; and
   calculating a solution of the equation in vicinity of input parameters corresponding to the predicted eigen solution candidates.

FIG. 1

INFORMATION PROCESSING APPARATUS  1

CONTROL UNIT  10

INPUT UNIT  11

SOLUTION PREDICTING UNIT  16

HPC CALCULATING UNIT GROUP  12

INPUT/OUTPUT HOLDING UNIT  161

MODEL GENERATING UNIT  162

EIGEN SOLUTION PREDICTING UNIT  163

HPC CALCULATING UNIT  121

· · ·

HPC CALCULATING UNIT  121

EVOLUTIONARY COMPUTATION UNIT  14

OUTPUT UNIT  15

PERFORMANCE VALUE EVALUATING UNIT  13

STORAGE UNIT  20

INPUT/OUTPUT STORAGE UNIT  21

LEARNING MODEL  22

# FIG. 2

FUNCTION VALUE OF
FUNCTION $h_K(z)$

ESTIMATED
VALUE $y_K$

$h_1(z_1)$  $h_2(z_1)$  $\cdots$  $h_K(z_1)$

$h_1(z_2)$  $h_2(z_2)$  $\cdots$  $h_K(z_2)$

$h_1(z_3)$  $h_2(z_3)$  $\cdots$  $h_K(z_3)$

1

2

20

FIG. 3

# FIG. 4

START

INPUT A PLURALITY OF INPUT VALUES "$x_{km}$" (STRUCTURE/DESIGN VALUES) TO BE DESIGNED — S11

CALCULATE OPERATING CONDITION INHERENT TO INPUT VALUE (SEARCH EIGEN SOLUTION AND EIGEN ACTION FROM ENTIRE RANGE) — S12

DETERMINE EIGEN SOLUTION AND EIGEN ACTION — S13

CUMULATIVELY SAVE INPUT VALUES, FUNCTION VALUES OF FUNCTION $h_{km}(z)$ IN EQUATION AND EIGEN SOLUTIONS FOR EQUATION IN ASSOCIATION — S14

CALCULATE PERFORMANCE OF EACH TARGET INPUT VALUE — S15

EVALUATE EACH INPUT VALUE TO PERFORMANCE — S16

S17
DOES GENERATION EXCEED THRESHOLD VALUE?

NO → SELECT FROM INPUT VALUE "$x_{km}$" — S18

GENERATE INPUT VALUES "$x_{k+1m}$" OF NEXT GENERATION (CROSSING AND VARIATIONS) — S19

YES

GENERATE LEARNING MODEL FROM ASSOCIATIONS OF FUNCTION VALUES OF FUNCTION $h_{km}(z)$ IN EQUATION AND EIGEN SOLUTIONS FOR EQUATION, WHICH ARE CUMULATIVELY SAVED — S20

END

# FIG. 5

START

INPUT A PLURALITY OF INPUT VALUES "$x_{km}$" (STRUCTURE/DESIGN VALUES) TO BE DESIGNED — S21

ESTIMATE SOLUTION CANDIDATE RANGE OF EQUATION FOR INPUT VALUES BY USING LEARNING MODEL — S22

PREDICT EIGEN SOLUTIONS IN SOLUTION CANDIDATE RANGE — S23

S24
HAS PREDICTION OF EIGEN SOLUTIONS SUCCEEDED?

YES

NO

CALCULATE OPERATING CONDITION INHERENT TO INPUT VALUE (SEARCH EIGEN SOLUTION AND EIGEN ACTION FROM ENTIRE RANGE) — S25

DETERMINE EIGEN SOLUTION AND EIGEN ACTION — S26

CALCULATE PERFORMANCE OF EACH INPUT VALUE — S27

EVALUATE EACH INPUT VALUE TO PERFORMANCE — S28

S29
SATISFY END CONDITION?

NO

SELECT FROM INPUT VALUE "$x_{km}$" — S30

GENERATE INPUT VALUES "$x_{k+1m}$" OF NEXT GENERATION (CROSSING AND VARIATIONS) — S31

YES

SELECT OPTIMUM INPUT VALUE — S32

END

# FIG. 6

## FIG. 7

# FIG. 8

| | $h_{km}(z_1)$ | $h_{km}(z_2)$ | $h_{km}(z_3)$ | $y_{km}$ |
|---|---|---|---|---|
| $x_{00}$ | $h_{00}(z_1)$ | $h_{00}(z_2)$ | $h_{00}(z_3)$ | $y_{00}$ |
| $x_{01}$ | $h_{01}(z_1)$ | $h_{01}(z_2)$ | $h_{01}(z_3)$ | $y_{01}$ |
| $x_{02}$ | $h_{02}(z_1)$ | $h_{02}(z_2)$ | $h_{02}(z_3)$ | $y_{02}$ |
| $\vdots$ | $\vdots$ | $\vdots$ | $\vdots$ | $\vdots$ |
| $x_{ln}$ | $h_{ln}(z_1)$ | $h_{ln}(z_2)$ | $h_{ln}(z_3)$ | $y_{ln}$ |

INPUT VALUE

# FIG. 9

VCO CIRCUIT

Vcnt

□ :DESIGN CONDITION EXAMPLE

⇩

OSCILLATORY FREQUENCY AND
OPERATING VOLTAGE

PHASE NOISE (PERFORMANCE) AT
SPECIFIED FREQUENCY

f  Vcnt DEPENDS ON
STRUCTURE

INPUT VALUE 1
(STRUCTURE 1)

INPUT VALUE 2
(STRUCTURE 2)

25GHZ
(OPERATING
CONDITION)

V1 z2 V2
z1    z3

Vcnt
(OPERATING
VOLTAGE)

EIGEN
SOLUTION

n
(NOISE)

Vcnt=V1

Vcnt=V2

STRUCTURE
1

STRUCTURE
2

# FIG. 10

START

INPUT A PLURALITY OF INPUT VALUES "$x_{km}$" (STRUCTURE/DESIGN VALUES) TO BE DESIGNED — S41

ESTIMATE SOLUTION CANDIDATE RANGE FOR EIGEN OPERATING VOLTAGES FOR INPUT VALUES BY USING LEARNING MODEL — S42

PREDICT EIGEN OPERATING VOLTAGE IN SOLUTION CANDIDATE RANGE — S43

S44
HAS PREDICTION OF EIGEN OPERATING VOLTAGES SUCCEEDED? — YES

NO

CALCULATE OPERATING VOLTAGE INHERENT TO EACH INPUT VALUE (SEARCH EIGEN OPERATING VOLTAGE TO BE SPECIFIED FROM ENTIRE RANGE) — S45

DETERMINE EIGEN OPERATING VOLTAGE — S46

CALCULATE PERFORMANCE OF EACH INPUT VALUE — S47

EVALUATE EACH INPUT VALUE TO PERFORMANCE — S48

S49
SATISFY END CONDITION? — END CONDITION : "NO"

END CONDITION : "YES"

SELECT OPTIMUM INPUT VALUE — S52

END

SELECT FROM INPUT VALUE "$x_{km}$" — S50

GENERATE INPUT VALUES "$x_{k+1m}$" OF NEXT GENERATION (CROSSING AND VARIATIONS) — S51

# FIG. 11

COMPUTER 200

HDD 205

INFORMATION PROCESSING PROGRAM 205a

INFORMATION PROCESSING RELATED INFORMATION 205b

MEMORY 201

DRIVE DEVICE 213

CPU 203

DISPLAY CONTROLLER 207

DISPLAY DEVICE 209

INPUT DEVICE 215

COMMUNICATION CONTROLLER 217

219

211

TO NETWORK

EP 3 809 338 A1

# FIG. 12

(a) Conventional SAW guide

(b) Divided type SAW guide

# FIG. 13

N_eff EIGEN SOLUTION

SAW INTENSITY DISTRIBUTION

EIGEN SOLUTION

ZERO CONVERGENCE

EXCLUDING N_eff EIGEN SOLUTION

EXCLUDING ZERO

# FIG. 14

**ENTIRE SEARCH FOR 1000 POINTS**

POSSIBLE RANGE OF EIGEN SOLUTION

$A_{Lk}$

EIGEN SOLUTION $g(x_k)$

0      z

EIGEN INTENSITY DISTRIBUTION CALCULATED BASED ON EIGEN SOLUTIONS

$A_L$

CALCULATE VALUE HERE AS PERFORMANCE VALUE

$f(x_k)$

0    POSITION

PERFORMANCE $f(x)$

PERFORMANCE EVALUATION

1.4
1.2
1.0
0.8

0   $x_1$   $x_2$   $x_3$   $x_4$   INPUT VALUE x

$x_1$: △
$x_2$: ○
$x_3$: ◎
$x_4$: ×

START

INPUT A PLURALITY OF INPUT VALUES "$x_{km}$" (STRUCTURE/DESIGN VALUES) TO BE DESIGNED — S110

CALCULATE OPERATING CONDITION INHERENT TO INPUT VALUE (SEARCH EIGEN SOLUTION AND EIGEN ACTION FROM ENTIRE RANGE) — S120

DETERMINE EIGEN SOLUTION AND EIGEN ACTION — S130

CALCULATE PERFORMANCE OF TARGET INPUT VALUE — S140

EVALUATE EACH INPUT VALUE TO PERFORMANCE — S150

END CONDITION: "NO"

END CONDITION: "YES"

SELECT OPTIMUM INPUT VALUE — S180

END

k: GENERATION NUMBERS 1 TO j
m: INPUT VALUE NUMBERS 1 TO n WITHIN GENERATION
EXAMPLE: FIFTH INPUT VALUE OF THIRD GENERATION IS $x_{35}$

**EVOLUTIONARY COMPUTATION**

$x_1$: △   KEEP
$x_2$: ○   KEEP
$x_3$: ◎   COPY BEST
$x_4$: ×   REMOVE WORST

SELECT FROM INPUT VALUE "$x_{km}$" — S160

GENERATE INPUT VALUES "$x_{k+1m}$" OF NEXT GENERATION (CROSSING AND VARIATIONS) — S170

EP 3 809 338 A1

FIG. 15

Europäisches
Patentamt

European
Patent Office

Office européen
des brevets

## EUROPEAN SEARCH REPORT

Application Number

EP 20 19 2793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TSUNODA YUKITO TSUNODA YUKITO@FUJITSU COM ET AL: "Neural-network assistance to calculate precise eigenvalue for fitness evaluation of real product design", PROCEEDINGS OF THE GENETIC AND EVOLUTIONARY COMPUTATION CONFERENCE COMPANION, ACMPUB27, NEW YORK, NY, USA, 13 July 2019 (2019-07-13), pages 405-406, XP058452286, DOI: 10.1145/3319619.3321884 ISBN: 978-1-4503-6748-6 * sections 2 and 3 * ----- | 1-7 | INV. G06N3/12 G06N3/08 |

| TECHNICAL FIELDS SEARCHED (IPC) |
|---|
| G06N G06F |

The present search report has been drawn up for all claims

| Place of search | Date of completion of the search | Examiner |
|---|---|---|
| The Hague | 11 March 2021 | Douarche, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005209211 A

- JP 2006088331 A